# EUROPÄISCHE PATENTSCHRIFT

(11) **EP 2 617 949 B1**
(45) Veröffentlichungstag und Bekanntmachung des Hinweises auf die Patenterteilung: **30.08.2017**
(21) Anmeldenummer: 13151103.2
(22) Anmeldetag: 14.01.2013
(51) Int. Cl.: F01D 11/08

(54) **Strömungsmaschinen-Dichtungsanordnung**
Flow engine seal assembly
Agencement d'étanchéité pour turbomachines

(30) Priorität: 23.01.2012 DE 102012200883
(43) Veröffentlichungstag der Anmeldung: 24.07.2013
(73) Patentinhaber: MTU Aero Engines AG, 80995 München (DE)
(72) Erfinder: Werner, André, 80639 München (DE); Prieschl, Franz, 85293 Reichertshausen (DE); Heß, Thomas, 81541 München (DE); Schlothauer, Steffen, 85253 Erdweg (DE)

(56) Entgegenhaltungen:
- EP-A1- 1 808 508
- EP-A2- 0 702 130
- DE-A1-102012 106 175
- US-A1- 2004 265 120
- US-A1- 2005 003 172

## Beschreibung

Die vorliegende Erfindung betrifft eine Dichtungsanordnung für eine Strömungsmaschine, insbesondere eine Gasturbine, eine Strömungsmaschine mit einer solchen Dichtungsanordnung sowie ein Verfahren zur Herstellung einer solchen Dichtungsanordnung.

In Strömungsmaschinen beeinträchtigen Lcckageströmungen durch Radialspalte zwischen Rotor und Stator, beispielsweise zwischen den Spitzen oder Deckbändern von Laufschaufeln und dem Gehäuse und/oder zwischen den Spitzen oder Deckbändern von Leitschaufeln und dem Rotor, den Wirkungsgrad.

Um solche Leckageströmungen zu reduzierten, werden üblicherweise Wabendichtungen verwendet, wie sie etwa in der WO 02/42610 A2 beschrieben sind. Solche in Axialrichtung spiegelsymmetrischen Wabctxdiclatungen sind verbesserungsföhig,

Weitere Dichtungen für Strömungsmaschinen sind aus den Druckschriften US 2005/003172 A1, EP 1 808 508 A1, DE 10 2012 106 175 A (nachveröffentlicht), EP 0 702 130 A2 und US 2004/0265120 A1 bekannt.

Aufgabe der vorliegenden Erfindung ist es, eine verbesserte Strömungsmaschine zur Verfugung zu stellen.

Diese Aufgabe wird durch eine Dichtungsanordnung mit den Merkmalen des Anspruchs 1 gelöst. Anspruch 8 stellt eine Strömungsmaschine mit einer erfindungsgemäßen Dichtungsanordnung, Anspruch 9 ein Verfahren zur Herstellung einer erfindungsgemäßen Dichtungsanordnung unter Schutz. Vorteilhafte Ausführungsformen der Erfindung sind Gegenstand der Untcransprliche.

Eine erfindungsgemäße Dichtungsanordnung ist zur Anordnung an einem Rotor und/oder Stator einer Strömungsmaschine, insbesondere einer Gasturbine, vorzugsweise eines Flugtriebwerks vorgegehen. Insbesondere kann eine erfmdungsgemäße Dichtungsanordnung an Spitzen oder Deckbändern, von Laufschaufeln und/oder an einem gegenüberliegenden Gehäuse und/oder an Spitzen oder Deckbändern von Leitschaufeln und/oder an einer gegenüberliegenden Rotoroberfläche einer oder mehrerer Verdickter- und/oder Turbinenstufen einer Gasturbine, insbesondere eines Flugtriebwerks, angeordnet sein.

Eine erfindungsgemäße Dichtungsanordnung weist zwei oder mehr Reihen von. Muscheln aus. Zwei oder mehr Muscheln einer Reihe sind in Umfangsrichtung miteinander verbundenen, insbesondere integral miteinander ausgebildet, und gehen in einer bevorzugten Ausführung ineinander über, insbesondere in einer Kante oder einem Radius. Die Reihen sind in Axialrichtung hintereinander angeordnet

Als Muschel wird vorliegend eine Wandung bzw. ein Profil bezeichnet, die bzw. das sich im Wesentlichen in Radialrichtung erstreckt. In einer Abwicklung bzw. einem Schnitt mit konstantem Radius zur Rotationsachse der Strömungsmaschine weist eine solche Muschel einen offenen Querschnitt auf. Die Flächenmittelpunkte der in Radialrichtung übereinanderliegenden Querschnitte definieren eine Fädelachse der Muschel.

Die Fädelachse einer oder mehrerer, vorzugsweise aller Muscheln der Dichtungsanordnung ist gegen eine Durchströmungsrichtung geneigt. Eine Fädelachse ist insbesondere gegen eine Durchströmungsrichtung geneigt, wenn ein Querschnitt der Muschel, der in Radialrichtung näher zu einem Spalt zwischen Rotor und Stator bzw. zu einer freien Oberfläche bzw. Dichtungsfläche der Dichtungsanordnung ist, gegenüber einem Querschnitt der Muschel, der von einem Spalt zwischen Rotor und Stator bzw. einer freien Oberfläche bzw. Dichtungsfläche der Dichtungsanordnung weiter beabstandet ist, gegen die Durchströmungsrichtung versetzt ist. Mit anderen Worten liegt ein Querschnitt, der von einem Spalt zwischen Rotor und Stator bzw. einer freien Oberfläche bzw. Dichtungsfläche der Dichtungsanordnung weiter beabstandet ist, in Durchströmungsrichtung stromabwärts zu einem Querschnitt, der näher zur einem Spalt zwischen Rotor und Stator brw. zu einer freien Oberfläche bxw. Dichtungsfläche der Dichtungsanordnung ist. In einer bevorzugten Weiterbildung ist die Fadenachse zusätzlich in Umfangsrichtung geneigt, gleichermaßen kann sie auch, wenigstens im Wesentlichen, vollständig in einen Meridianschnitt liegen bzw. nicht in Umfangsrichtung geneigt sein.

Richtungsangaben, insbesondere Umfangs-, Radial- und Axialrichtung beziehen sich insbesondere auf eine an der Strömungsmaschine angeordnete Dichtungsanordnung. Als Durchströmungsrichtung wird insbesondere die (Haupt)Sttömungsrichtung einer Leckageströmung bezeichnet, die durch die Dichtungsanordnung reduziert werden soll. Eine Durchströmungsrichtung kann insbesondere von einem höheren zu einem niedrigeren Druckniveau der Strömungsmaschine definiert und/oder parallel zur Rotationsachse bzw. Axialrichtung der Strömungsmaschine sein.

Zusätzlich oder alternativ weisen zwei oder mehr, vorzugsweise alle, in Axialrichtung benachbarte Muscheln gegen die Durchströmungsrichtung geöffnete Querschnitte auf. Ein Querschnitt ist insbesondere gegen die Durchströmungsrichtung geöffnet, wenn er zur Durchströmungsrichtung konkav ausgebildet ist und/oder eine Strömung in Durchströmungsrichtung stromabwärts sammelt.

Durch Muscheln, die - durch die Neigung ihrer Fädelachse - in Radialdichtung und/oder - durch die geöffneten Querschnitte - in einer Abwicklung bzw. einem Schnitt in Umfangs- und Axialrichtung konkav gegen die Durchströmungsrichtung ausgebildet sind, kann vorteilhafterweise der Strömungswiderstand gegen eine Leckageströmung erhöht und so die Leckageströmung reduziert und der Wirkungsgrad der Strömungsmaschine erhöht werden. Die LeckageStrömung wird von den gegen sie angestellten Muscheln, sozusagen "gefangen" bzw. "abgeschöpft".

In einer bevorzugten Ausführung kommunizieren einige oder alle in Umfangsrichtung benachbarte Muscheln in Umfangsrichtung miteinander. Mit anderen Worten kann Fluid in Umfangrichtung zwischen benachbarten Muschelreihen strömen, die Dichtungsanordnung ist in Umfangsrichtung bzw. tangential offen. Im Gegensatz zu bekannten Dichtungsanordnungen mit geschlossenen Waben können so insbesondere über den Umfang verteilten Inhomogenitäten und/oder einer Umfängskomponente der Leckageströmung Rechnung getragen werden.

Gleichermaßen können einige oder alle in Umfangsrichtung benachbarte Muscheln in Umfangsrichtung geschlossene Zellen begrenzen. Mit anderen Worten ist keine Fluidströmung in Umfangsrichtung zwischen benachbarten Muscheln möglich. Hierdurch kann insbesondere die Stabilität der Dichtungsanordnung erhöht werden.

In einer bevorzugten Ausführung weisen eine oder mehrere, insbesondere alle Muschel, wenigstens im Wesentlichen, einen gleichbleibenden Querschnitt längs der Fadenachse auf. Gleichermaßen kann der Querschnitt längs der Fädelachse variieren, vorzugsweise kongruent. In einer bevorzugten Ausführung ist der Querschnitt wenigstens abschnittsweise, vorzugsweise längs der gesamten Fädelachse, wenigstens im Wesentlichen V- oder U-förmig. Unter einem V-förmigen Querschnitt wird insbesondere ein gegen die Durchströmungsrichtung gepfeilte Querschnitt mit zwei, wenigstens im Wesentlichen, geraden Schenkeln verstanden, die sich zur Durchströmung hin öffnen, in einer Kante oder einem Radius ineinander übergehen und in einer bevorzugten Weiterbildung symmetrisch zur Axialrichtung ausgerichtet sind. Unter einem U-förmigen Querschnitt wird insbesondere ein gegen die Durchströmungsrichtung offener Querschnitt mit zwei, wenigstens im Wesentlichen, parallelen Schenkeln verstanden, die in einem Bogen oder einer zu den Schenkel senkrechten Geraden durchströmungsabwärts ineinander übergeben.

In einer bevorzugten Ausführung fluchten Querschnitte in Axialrichtung hintereinander angeordneter Muscheln in Axialrichtung. Hierunter wird insbesondere verstanden, dass in Axialrichtung benachbarte Querschnitte durch eine reine Verschiebung in Axialrichtung ineinander übergehen und/oder in Axialrichtung benachbarte Querschnitte dieselbe Symmetrie-Meridianebene aufweisen. Beispielsweise fluchten V-förmige Querschnitte insbesondere dann im Sinne der vorliegenden Erfindung, wenn ihre Spitzen in demselben Meridianschnitt liegen. Als Meridianschnitt wird insbesondere ein Schnitt bezeichnet, der die Rotationsachse der Strömungsmaschine enthält.

In einer bevorzugten Ausführung sind die Fädelachsen von zwei oder mehr, insbesondere allen, Muscheln wenigstens im Wesentlichen, parallel zueinander. Eine oder mehrere, insbesondere alle, Fädelachse können abschnittsweise oder über ihre gesamte Länge gerade sein. Gleichermaßen können Fädelachse abschnittsweise oder über ihre gesamte Länge gekrümmt sein, in diesem Fall wird für einen Winkel bzw. eine Neigung der Fädelachse Bezug auf die Tangente an die gekrümmte Fädelachse genommen. Eine gekrümmte Fädelachse ist dementsprechend insbesondere gegen die Durchströmungsrichtung geneigt, wenn eine oder mehrere, insbesondere alle Tangenten an die Fädelachse gegen die Durchströmungsrichtung geneigt sind.

In einer bevorzugten Ausführung sind die Fädelachsen von zwei oder mehr, insbesondere allen, Muscheln in einem Winkel zur Radialrichtung geneigt ist, der betragsmäßig wenigstens 5°, insbesondere wenigstens 10°, und/oder höchstens 60°, insbesondere höchstens 50° beträgt. Diese Winkelbereiche haben sich strömungs- und festigkeitstechnisch als besonders vorteilhaft herausgestellt, Sie entsprechend insbesondere einem (Komplementär) Winkel zur Axial- und/oder Durchströmungsrichtung von höchstens 85°, insbesondere höchstens 80° und/oder wenigstens 30°, insbesondere wenigstens 40°.

In einer bevorzugten Ausführung werden einige, insbesondere alle, Muscheln der Dichtungsanordnung schichtweise mittels eines generativen Verfahrens hergestellt. Dabei wird in einer bevorzugten Weiterbildung eine Pulver- oder Fluidschicht bereichsweise physikalisch, insbesondrere optisch und/oder thermisch, vorzugsweise mittels eines Lasers und/oder einer Maske, und/oder chemisch, insbesondere mittels wenigstens einer Düse, verfestigt und dabei mit einer darunterliegenden Schicht verbunden. Dieses Verfahren ist besonderes geeignet zur Herstellung der konkaven Muschelanordnung.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
Fig. 1: eine Draufsicht auf einen Teil einer Dichtungsanordnung einer Gasturbine nach einer Ausführung der vorliegenden Erfindung;
Fig. 2: einen Meridianschnitt längs der Linie II-II in Fig. 1 und 5;
Fig. 3: eine Dichtungsanordnung nach einer weiteren Ausführung der vorliegenden Erfindung in Fig. 1 entsprechender Darstellung;
Fig. 4: einen Meridianschnitt längs der Linie IV-IV in Fig. 3 und 6;
Fig. 5: eine Dichtungsanordnung nach einer weiteren Ausführung der vorliegenden Erfindung in Fig. 1 entsprechender Darstellung; und
Fig. 6: eine Dichtungsanordnung nach einer weiteren Ausführung der vorliegenden Erfindung in Fig. 3 entsprechender Darstellung.

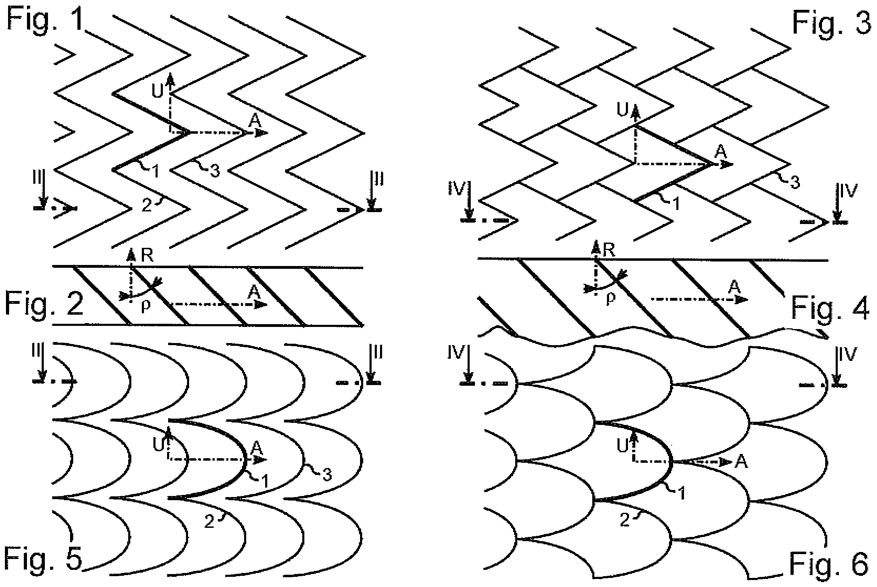

Fig. 1 zeigt eine Draufsicht entgegen einer Radialrichtung R (vgl. Fig. 2) auf einen Teil einer Dichtungsanordnung einer Gasturbine nach einer Ausführung der vorliegenden Erfindung. Man erkennt sechs in Axialrichtung A hintereinanderliegende Reihen von je drei in Umfangsrichtung U nebeneinander angeordneten und miteinander verbundenen Muscheln. Von diesen ist zur Erläuterung eine Muschel 1 fett hervorgehoben, eine ihr in Axialrichtung durchströmungsabwärts benachbarte Muschel 3 sowie eine in Umfangs- bzw. Rotationsrichtung benachbarte Muschel 2 sind zur leichteren Adressierung mit Bezugszeichen versehen. Die Dichtungsanordnung erstreckt sich über wenigstens einen Axialabschnitt einer einem Radialspalt zugewandten Mantelfäche einer Laufschaufelspitze oder eines Laufschaufeldeckbandes, einer Leitschaufelspitze oder eines Leitschaufeldeckbandes, und/oder einer gegenüberliegenden Mantelfläche von Gehäuse bzw. Rotor (nicht weiter dargestellt).

Im Ausfuhrungsbeispiel fällt eine Durchströmungsrichtung einer Leckageströmung von einem höheren zu einem niedrigeren Druckniveau mit der Axialrichtung A zusammen (horizontal von links nach rechts in Fig. 1 bis 6).

Die Muscheln der Dichtungsanordnung, insbesondere die oben genannten Muscheln 1 bis 3, weisen alle über ihre gesamte Länge denselben konstanten V-förmigen Querschnitt auf, der gegen diese Durchströmungsrichtung A geöffnet ist. Zusätzlich ist die gerade Fädelachse der Muscheln, wie insbesondere im Meridianschnitt der Fig. 2 erkennbar, gegen diese Durchströmungsrichtung geneigt und schließt mit der Radialrichtung R einen Winkel p von 45° ein, mit der Durchströmung- und Axialrichtung A entsprechend einen Komplementärwinkel von 90° - p, d.h. ebenfalls 45°. Die Fädelachse ist parallel zu den in Fig. 2 sichtbaren in Durchströmungsrichtung stromaufwärtigen Stirnseiten der Muscheln (links in Fig. 1, 2).

Auf diese Weise "fangen" die konkaven Muscheln Leckageströmung und leiten diese radial vom Radialspalt weg zur stromabwärtigen Kante der V-förmigen Muscheln hin. Der auf diese Weise erhöhte Strömungswiderstand senkt die Leckageverluste und erhöht so den Wirkungsgrad der Gasturbine.

Fig. 5 zeigt in Fig. 1 entsprechender Darstellung eine Dichtungsanordnung nach einer weiteren Ausführung der vorliegenden Erfindung. Einander entsprechende Merkmale sind durch identische Bezugszeichen bezeichnet, so dass nachfolgend nur auf die Unterschiede zur Ausführung der Fig. 1 eingegangen und im Übrigen auf deren Beschreibung Bezug genommen wird.

Bei der Ausführung der Fig. 5 weisen die Muscheln statt V-förmiger U-förmige Querschnitte auf, wobei in Axialrichtung benachbarte Muscheln 1, 3 ebenfalls eine gegen die Durchströmungsrichtung A geneigte Fädelachse (vgl. Fig. 2) sowie geöffnete Querschnitte aufweisen.

Wie bei der Ausführung der Fig. 1 kommunizieren auch bei der Ausführung der Fig. 5 in Umfangsrichtung benachbarte Muschel 1, 2 in Umfangsrichtung miteinander: Leckagefluid kannim Gegensatz zu Wabendichtungen - zwischen den Verbindungskanten von in Umfangsrichtung benachbarten Muscheln I, 2 und hiermit fluchtenden Verbindungskanten von in Umfangsrichtung benachbarten Muscheln 3 einer in Axialrichtung benachbarten Reihe in Umfangsrichtung strömen und so Inhomogenitäten sowie einer Umfangskomponente Rechnung tragen.

Fig. 3, 4 zeigen in Fig. 1, 2 entsprechender Darstellung eine Dichtungsanordnung nach einer weiteren Ausführung der vorliegenden Erfindung. Einander entsprechende Merkmale sind durch identische Bezugszeichen bezeichnet, so dass nachfolgend nur auf die Unterschiede zur Ausführung der Fig. 1, 2 eingegangen und im Übrigen auf deren Beschreibung Bezug genommen wird.

Bei der Ausführung der Fig. 3 begrenzen in Umfangsrichtung benachbarte Muscheln in Umfangsrichtung geschlossene Zellen, so dass in Umfangsrichtung keine Fluidströmung zwischen benachbarten Muscheln möglich ist. Durch die geschlossenen Zellen wird eine erhöhte Stabilität der Dichtungsanordnung erhielt.

Fig. 6 schließlich zeigt in Fig. 3, 5 entsprechender Darstellung eine Dichtungsanordnung nach einer weiteren Ausführung der vorliegenden Erfindung. Einander entsprechende Merkmale sind durch identische Bezugszeichen bezeichnet, so dass nachfolgend nur auf die Unterschiede zur Ausführung der Fig. 3 und 5 eingegangen und im Übrigen auf deren Beschreibung Bezug genommen wird.

Wie bei der Ausführung der Fig. 3 begrenzen auch bei der Ausführung der Fig. 6 in Umfangsrichtung benachbarte Muscheln, 1,2 in Umfangsrichtung geschlossene Zellen, so dass in Umfangsrichtung keine Fluidströmung zwischen benachbarten Muscheln 1, 2 möglich ist, Wie bei der Ausführung der Fig. 5 weisen die Muscheln U-förmige Querschnitte auf, wobei in Axialrichtung benachbarte Muscheln ebenfalls eine gegen die Durchströmungsrichtung A geneigte Fädelachse (vgl. Fig. 4) sowie geöffnete Querschnitte aufweisen.

Die Muschel der Ausführungen der Fig. 1 bis 6 werden jeweils integral mittels eines generativen Herstellungsverfahrens hergestellt. Hierzu werden - in der Zeichenebene der Fig. 1, 3, 5 bzw. 6 - jeweils eine dünne Pulver- oder Fluidschicht bereitgestellt, in dieser bereichsweise bzw. lokal - beispielsweise durch Belichtung mit einem Laser oder einer Maske oder durch Aufbringen einer Chemikalie durch eine Nadeldüse - die Querschnitte der Muscheln verfestigt und dabei mit der darunter liegenden Schicht verbunden, anschließend das nicht verfestigte Pulver bzw. Fluid entfernt und eine weitere dünne Pulver- oder Fluidschicht bereitgestellt, wobei diese Schritte solange wiederholt werden, bis die Muscheln in Radialrichtung R schichtweise generativ aufgebaut worden sind. Indem die zu verfestigenden Bereiche bei. jeder neuen Schicht gegen die Durchströmungsrichtung A zugestellt bzw. versetzt werden, können die konkaven, hinterschnittenen Muscheln integral miteinander urgeformt werden.

### Bezugszeichenliste

- 1 - 3: Muschel
- A: Axialrichtung
- U: Umfangsrichtung
- R: Radialrichtung

## Patentansprüche

1. Dichtungsanordnung für eine Strömungsmaschine, insbesondere eine Gasturbine, mit einer Mehrzahl von in Axialrichtung (A) hintereinander angeordneten Reihen von in Umfangsrichtung (U) miteinander verbundenen Muscheln (1-3), wobei in Axialrichtung benachbarte Muscheln gegen eine Durchströmungsrichtung (A) geöffnete Querschnitte aufweisen, **dadurch gekennzeichnet, dass** die Muschel (1, 2) eine gegen die Durchströmungsrichtung geneigte Fädelachse aufweisen.

2. Dichtungsanordnung nach Anspruch 1, **dadurch gekennzeichnet, dass** in Umfangsrichtung benachbarte Muscheln (1, 2) in Umfangsrichtung miteinander kommunizieren.

3. Dichtungsanordnung nach einem der vorhergehenden Ansprüche, **dadurch gekennzeichnet, dass** in Umfangsrichtung benachbarte Muscheln (1,2) in Umfangsrichtung geschlossene Zellen begrenzen.

4. Dichtungsanordnung nach einem der vorhergehenden Ansprüche, **dadurch gekennzeichnet, dass** Muscheln, wenigstens im Wesentlichen, einen V- oder U-förmigen Querschnitt aufweisen.

5. Dichtungsanordnung nach einem der vorhergehenden Ansprüche, **dadurch gekennzeichnet, dass** Querschnitte in Axialrichtung hintereinander angeordneter Muschel (1, 3) in Axialrichtung fluchten.

6. Dichtungsanordnung nach einem der vorhergehenden Ansprüche **dadurch gekennzeichnet, dass** eine Fädelachse einer Muschel in einem Winkel zur Radialdichtung geneigt ist, der wenigstens 5°, insbesondere wenigstens 10°, und/oder höchstens 60°, insbesondere höchstens 50° beträgt.

7. Dichtungsanordnung nach einem der vorhergehenden Ansprüche, **dadurch gekennzeichnet, dass** Muscheln schichtweise mittels eines generativen Verfahrens hergestellt worden sind.

8. Strömungsmaschine, insbesondere Gasturbine, mit einer Dichtungsanordnung nach einem der vorhergehenden Ansprüche, **dadurch gekennzeichnet, dass** die Dichtungsanordnung an einem Rotor und/oder Stator der Strömungsmaschine angeordnet ist.

9. Verfahren zur Herstellung einer Dichtungsanordnung nach einem der vorhergehenden Ansprüche, **dadurch gekennzeichnet, dass** Muscheln der Dichtungsanordnung schichtweise mittels eines generativen Verfahrens hergestellt werden.

## Claims

1. A sealing system for a turbomachine, in particular a gas turbine, comprising a plurality of rows, arranged in succession in the axial direction (A), of shells (1-3) connected to one another in the circumferential direction (U), adjoining shells in the axial direction having cross-sections that are opened counter to a throughflow direction (A), **characterized in that** the shells (1, 2) have a thread axis that is inclined counter to the throughflow direction,

2. The sealing system according to claim 1, **characterized in that** shells (1, 2) adjoining in the circumferential direction communicate with one another in the circumferential direction.

3. The sealing system according to any one of the preceding claims, **characterized in that** shells (1, 2) adjoining in the circumferential direction delimit cells closed in the circumferential direction.

4. The sealing system according to any one of the preceding claims, **characterized in that** shells, at least substantially, have a V-shaped or U-shaped cross-section.

5. The sealing system according to any one of the preceding claims, **characterized in that** cross-sections of shells (1, 3) arranged in succession in the axial direction are aligned in the axial direction,

6. The sealing system according to any one of the preceding claims, **characterized in that** a thread axis of a shell is inclined at an angle with respect to a radial direction which is at least 5°, in particular at least 10°, and/or at most 60°, in particular at most 50°.

7. The sealing system according to any one of the preceding claims, **characterized in that** shells have been produced in layers by way of a generative process.

8. A turbomachine, in particular a gas turbine, comprising a sealing system according to any one of the preceding claims, **characterized in that** the sealing system is arranged on a rotor and/or a stator of the turbomachine.

9. A method for producing the sealing system according to any one of the preceding claims, wherein shells of the sealing system are produced in layers by way of a generative process.

## Revendications

1. Agencement d'étanchéité pour une turbomachlne, en particulier une turbine à gaz, comprenant une pluralité de rangées - agencées l'une derrière l'autre dans la direction axiale (A) - de coquilles (1-3) reliées l'une à l'autre dans la direction circonférentielle (U), dans lequel les coquilles voisines dans la direction axiale présentent des sections transversales ouvertes à l'encontre de la direction de passage (A), **caractérisé en ce que** les coquilles (1, 2) présentent un axe de fil incliné à rencontre de la direction de passage.

2. Agencement d'étanchéité selon la revendication 1, **caractérisé en ce que** les coquilles (1,2) voisines dans la direction circonférentielle communiquent l'une avec l'autre dans la direction circonférentielle.

3. Agencement d'étanchéité selon l'une quelconque des revendications précédentes, **caractérisé en ce que** les coquilles (1,2) voisines dans la direction circonférentielles délimitent des cellules fermées dans la direction circonférentielle.

4. Agencement d'étanchéité selon l'une quelconque des revendications précédentes, **caractérisé en ce que** les coquilles présentent au moins sensiblement une section transversale en V ou en U.

5. Agencement d'étanchéité selon l'une quelconque des revendications précédentes, **caractérisé en ce que** les sections transversales des coquilles (1, 3) agencées l'une derrière l'autre dans la direction axiale s'alignent dans la direction axiale.

6. Agencement d'étanchéité selon l'une quelconque des revendications précédentes, **caractérisé en ce qu'**un axe de fil d'une coquille est incliné en faisant un angle avec la direction radiale, qui atteint au moins 5°, en particulier au moins 10° et/ou au maximum 60°, en particulier au maximum 50°.

7. Agencement d'étanchéité selon l'une quelconque des revendications précédentes, **caractérisé en ce que** les coquilles ont été fabriquées par couche au moyen d'un procédé génératif.

8. Turbomachine, en particulier turbine à gaz, comportant un agencement d'étanchéité selon l'une quelconque des revendications précédentes, **caractérisée en ce que** l'agencement d'étanchéité est aménagé sur un rotor et/ou un stator de la turbomachine.

9. Procédé de fabrication d'un agencement d'étanchéité selon l'une quelconque des revendications précédentes, **caractérisé en ce que** les coquilles de l'agencement d'étanchéité sont fabriquées par couche au moyen d'un procédé génératif.
